(19) Europäisches Patentamt
European Patent Office
Office européen des brevets

(11) **EP 3 624 564 A1**

(12) **EUROPÄISCHE PATENTANMELDUNG**

(43) Veröffentlichungstag:
18.03.2020 Patentblatt 2020/12

(51) Int Cl.:
***H05B 41/30*** (2006.01)

(21) Anmeldenummer: 18194343.2

(22) Anmeldetag: **13.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Rovak GmbH**
**01723 Wilsdruff (DE)**

(72) Erfinder:
• **Reichmann, Udo**
**01723 Wilsdruff (DE)**
• **Ochlich, Georg**
**01723 Kesselsdorf (DE)**

• **Neubert, Marcel**
**01731 Kreischa (DE)**

(74) Vertreter: **Lippert Stachow Patentanwälte Rechtsanwälte**
**Partnerschaft mbB**
**Krenkelstraße 3**
**01309 Dresden (DE)**

Bemerkungen:
Ein Antrag gemäss Regel 139 EPÜ auf Berichtigung den Zeichnungen liegt vor. Über diesen Antrag wird im Laufe des Verfahrens vor der Prüfungsabteilung eine Entscheidung getroffen (Richtlinien für die Prüfung im EPA, A-V, 3.).

(54) **VERFAHREN UND ANORDNUNG ZUR BLITZLAMPENSTEUERUNG**

(57)    Der Erfindung, die ein Verfahren zur Blitzlampensteuerung, bei dem ein einen Blitz erzeugender Hauptpuls des Lampenstromes bewirkt und davor ein Vorpuls des Lampenstromes durch Anlegen einer Vorspannung erzeugt wird sowie eine Anordnung betrifft, die eine Blitzlampe mit einer Zündelektrode, eine Vorspannungsquelle, eine Hauptspannungsquelle und ein Steuersystem aufweist, liegt die Aufgabe zugrunde, die Belastung einer Blitzlampe bei der Erzeugung eines Hauptpulses durch eine Vorzündung zu minimieren und diese durch eine einfache elektronische Schaltung zu realisieren und andererseits die Vorzündung für weitere Anwendungen nutzbar und vorteilhaft zu gestalten. Dies wird dadurch gelöst, dass der Vorpuls dadurch erzeugt wird, dass eine zur Vorspannung höhere Plasmaspannung als Elektrodenspannung angelegt wird und mittels einer Zündelektrode ein Plasma in der Blitzlampe gezündet und mittels der Vorspannung während des Vorpulses gehalten wird. Hierzu ist der Vorspannungsquelle rückwirkungsfrei eine Plasmaspannungsquelle parallel geschaltet ist, deren Wirkung durch die Zündelektrode steuerbar ist, wobei die Plasmaspannung größer als die Vorspannung ist. (Fig. 3)

FIG 3

**Beschreibung**

Die Erfindung betrifft ein Verfahren zur Blitzlampensteuerung, bei dem durch Anlegen einer Elektrodenspannung an die Elektroden einer Blitzlampe ein einen Blitz erzeugender Hauptpuls des Lampenstromes bewirkt und vor der Blitzerzeugung ein Vorpuls des Lampenstromes durch Anlegen einer Vorspannung erzeugt wird.

Die Erfindung betrifft auch eine Anordnung zur Blitzlampensteuerung mit einer Blitzlampe, die mit zwei Elektroden versehen ist, zwischen denen eine Elektrodenspannung anlegbar ist, einer mit der Blitzlampe in Wirkungsverbindung stehenden Zündelektrode, einer eine Vorspannung erzeugende Vorspannungsquelle, einer Hauptspannungsquelle und einem Steuersystem.

Eine Temperung mittels Blitzlampen, auch als FLA bezeichnet (flash lamp annealing), ist ein innovatives Verfahren zur thermischen Vor und- Nachbehandlung mittels Xenon-Lampen im Zeitbereich von wenigen tausendstel Sekunden. Durch die ultra-kurze Prozesszeit werden völlig neue technologische Möglichkeiten eröffnet. Ein wesentlicher Vorteil im Vergleich zu konventionellen Verfahren ist eine örtlich präzise Wärmezufuhr, beschränkt auf den gewünschten Substratbereich, wodurch die Temperaturbelastung des Substrats sinkt und signifikante Energieersparungen realisiert werden.

Die Integration in vorhandene Prozessketten ist aufgrund der kompakten Bauweise nahezu uneingeschränkt gegeben.

Das Prinzip der Blitzlampentemperung beruht auf der pulsartigen Zündung einer beispielsweise mit dem Edelgas Xenon gefüllten Quarzglasröhre, der Blitzlampe. Das dabei emittierte elektromagnetische Spektrum wird durch das Substrat absorbiert und die aufgenommene Energie führt zu einer oberflächennahen Erwärmung für wenige tausendstel Sekunden.

Der Prozess wird durch die Parameter Pulszeit, d.h. die Leuchtdauer der Lampen, und die dem Substrat zugeführte Energiedichte eingestellt und kontrolliert.

Die Elektronik besteht, vereinfacht dargestellt, aus einem gedämpften Schwingkreis, wobei die Pulszeit hauptsächlich durch die Wahl einer Induktivität in dem Schwingkreis und durch die Kapazität eines Kondensators bestimmt wird. Der Kondensator dient als Energiespeicher für die Entladung.

Das Zünden der Lampen erfolgt pulsartig, indem - mit Hilfe eines externen elektrischen Feldes ($E_{ext}$) oder durch eine an den Elektroden erzeugte Spannung - Ladungsträger generiert werden.

Als Puls, z.B. Zündpuls, Hauptpuls, Vorpuls usw. wird hier ein Puls im Verhalten Lampenstromes bezeichnet.

Der Innendurchmesser der Quarzglasröhre beschränkt das Plasmavolumen. Vom Zeitpunkt des Zündvorgangs bis zum Erreichen der maximalen Plasmaausdehnung wächst das Plasmavolumen ebenso pulsartig an (einige μs), wobei in dieser Phase die höchste Beanspruchung der Lampe

stattfindet. Bei jedem Blitz werden im Wesentlichen die Elektroden sowie das Quarzglas der Lampen geschädigt. Die Elektrodentemperatur steigt von Raumtemperatur auf mehrere hundert °C an, was zu einer thermischen Belastung der entsprechenden Lampenbauteile führt. Der kritische Parameter ist vor allem die Temperaturänderung der Lampenteilbereiche sowie die Druckerhöhung pro Zeit. Wird ein lampenspezifischer Energieschwellwert (die zugeführte Energie entspricht

$$E = \frac{1}{2}\,c\,U^2$$

) überschritten, kommt es zur Zerstörung der Elektroden. Die Zerstörung wird erreicht sobald der Stromanstieg (dI/dt) einen zulässigen Wert übersteigt oder wenn der Maximalstrom ($I_{peak}$) einen zulässigen Wert übersteigt. Darüber hinaus führt wiederholtes Blitzen im Normalbetrieb zu einer grundsätzlich nicht vermeidbaren Degradation der Elektroden und somit zu einer begrenzten Lebensdauer der Lampe.

Zur Minderung der Problematik existieren neben der Lampenkühlung auch elektronische Zusatzkomponenten, welche mit Hilfe eines vorgezündeten Plasmas mit wesentlich kleinerer Energie und/oder in kürzerer Zeit (im Vergleich zum eigentlichen Blitz) eine Vorheizung der Elektroden bewirken. Die Elektronik verbessert zudem die zeitliche Reproduzierbarkeit des Zündverhaltens und erhöht die zulässige maximale Stromdichte.

Es ist eine Lösung in einem Produkt der Analog Modules Inc. in Form einer Flashlamp Simmer Supply Model 864 A bekannt, mit der in gepulsten Lasersystemen Blitzlampen in der Zeit zwischen den Hauptentladungspulsen gesimmert werden. Das Simmering ist nichts anderes, als einen Erhaltungs-Strom (50mA bis 10A) in der Lampe zwischen den Pulsen fließen zu lassen. Die wird angewandt, um eine etablierte Leiterbahn in der Blitzlampe zum Zeitpunkt des Hauptentladungspulses vorliegen zu haben, was zu einer geringeren Schwankung der Energie zwischen den Hauptpulsen führt. Weiterhin soll die Lichtbogenausdehnung während des Pulses weniger heftig ausfallen, wodurch die Lampenlebenszeiten verbessert werden. Im Allgemeinen sollen sich sowohl die Stabilität als auch die Lebensdauer der Lampe mit steigendem Simmerstrom verbessern.

Bei dieser Lösung wird ein Plasmafaden (Teilionisation) generiert, welcher allerdings aufgrund der geringen Leistung den Plasmaraum nicht vollständig ausfüllt. Der durch den Simmer erzeugte DC-Strom führt zu einer Vorerwärmung der Elektroden, was zu einer Verbesserung der Reproduzierbarkeit des Zündverhaltens führt. Der angelegte Strom liegt im Mittel bei etwa 0,5 A. Die oben beschriebenen kritischen Zustände (Druckanstieg, Temperaturanstieg, Stromanstieg) werden jedoch durch den Simmer nicht signifikant beeinflusst. Der permanente Ionenbeschuss der Kathode während des Simmerbetriebs führt zu einer Schädigung der Lampe durch das Absputtern von Elektrodenmaterial.

Mit Jia, Shenli et al.: The Plasma Channel of Pulsed Flashlams Working in an Array", Plasma Science and Technology, Vol.15, No. 7; Juli 1013 ist eine Lösung zur Erzeugung eines nachfolgend "Vorpuls" genannten zeitlich limitierten Plasmas bekannt. Dabei kommt ein Kondensator mit einer Kapazität von 4μF zur Anwendung. Die Kapazität des parallel geschalteten Kreises zur Erzeugung des zeitlich verzögerten Hauptpulses ist um den Faktor 19 größer. Da die gleiche Spannung angelegt wird, ist auch die Energie des Hauptpulses um den Faktor der Kapazitäten größer. In der dargestellten Variante wird beschrieben, dass die Vorzündung einen sanfteren Betrieb der Lampe bewirkt, wodurch die mechanische Belastung, verursacht durch Schockwellen, sinkt. Die Vorzündung ermöglicht zudem eine schnellere Entladung des Hauptpulses, da der Plasmawiderstand bei Zündung bereites kleiner unendlich ist. Eine Pulsformung des Vorpulses ist nicht vorgesehen.

Zudem ist deutlich zu erkennen, dass zum Zeitpunkt der Zündung des Hauptpulses das Plasma nicht die maximal mögliche Ausdehnung erreicht hat.

Als nächstliegender Stand der Technik wird der Artikel T. Thrum et al.: Development of a Powerful Vortex Stabilized Water-Wall Flash Lamp for RTP Applications, 0-7803-8486-5/04 IEEE 2004, betrachtet. Darin wird eine Vorzündung bei deutlich höherer Leistung im Vergleich zum Simmer vorgesehen. Die Vorzündung erfolgt nicht nur durch die Entladung eines Kondensators, sondern wird mit Hilfe sogenannter IGBTs (Stromversorgungen mittels eines Insulated Gate Bipolar Transistor) generiert. Mit Hilfe einer reinen Kondensatorentladung erfolgt der eigentliche Hauptpuls mit einer zeitlichen Verzögerung. Durch die Dauer der Vorzündung wird ein Zustand erreicht bei dem das Plasma die maximale räumliche Ausdehnung erreicht hat (Strom ca.: 200 bis 800A). Ohne die Vorzündung ist infolge des Hauptpulses ein deutlich höherer Druckanstieg zu erwarten.

Diese Lösung bringt einen relativ hohen Gasverbrauch mit sich, was den Einsatz von Argon anstelle von Xenon wirtschaftlich sinnvoll erscheinen lässt. Der Einsatz von Argon verringert jedoch die Effektivität im Vergleich zu Xenon.

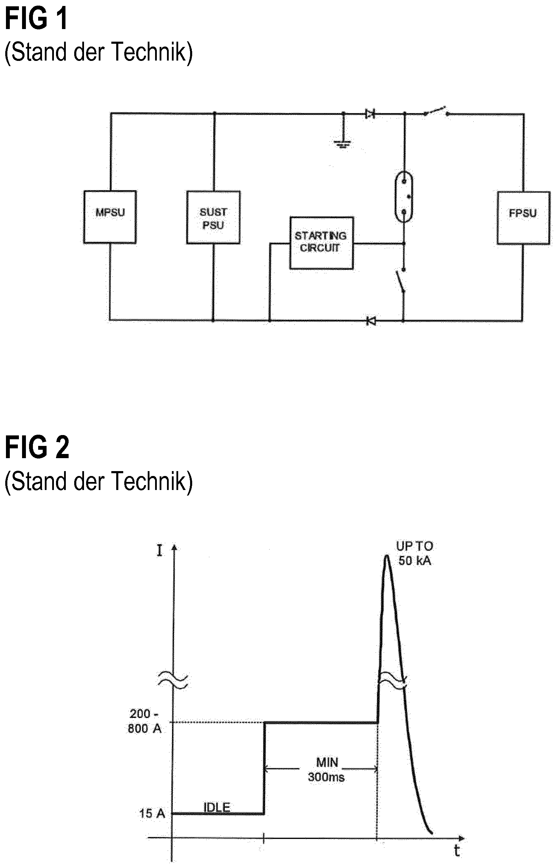

Die verschiedenen Stromversorgungskomponenten sowie die für den Betrieb der Blitzlichtbogenlampe zusammenwirkenden Schutzdioden und Schalter nach dem naheliegendsten Stand der Technik sind in Fig. 1 dargestellt.

Die Blitzlichtbogenlampe wird von drei verschiedenen Stromversorgungen gestartet und betrieben:
Eine Startschaltung (SCCT) als Spannungsvervielfacher zum Anlegen von bis zu 45 kV für den anfänglichen Durchbruch und zur Bereitstellung einer ausreichenden Energie für den Aufbau des Lichtbogenstroms, so dass die Lichtbogenantriebsspannung unter ca. 650 V sinkt und gehalten werden kann durch die Stromversorgung (SUST-Netzteil). Dieses Netzteil ist als Low-Ripple-Konstantstromversorgung zur Versorgung der Bogenlampe mit einem Haltestrom von 15 A ausgelegt.

Die Hauptstromversorgung (MPSU) liefert die gesamte Energie, die zum Betrieb der Lampe über ihrem Blindstrom benötigt wird.

Weiterhin ist eine Blitzentladungs-Stromversorgung (FPSU) an den Stromkreis angeschlossen.

Der typische Betrieb der Blitzlampe ist darin zu sehen, dass nach dem Starten und Aufrechterhalten des Lichtbogens durch die Startschaltung, das Hauptnetzteil die Lichtbogenlampe für mindestens einige hundert Millisekunden auf einen vorbestimmten Stromwert (den sogenannten Vorpuls) hochfährt,

Der Vorpuls ist so lang, dass sich der Druckanstieg während der Plasmaexpansion vor Beginn des Blitzes abbaut. Der transiente Druckanstieg während Vorpulses wird im Vergleich zu einem Blitz, der von der Leerlaufstromphase direkt erzeugt würde, deutlich reduziert, da der Vorpuls den Lampenraum vor dem Blitz mit heißem Plasma füllt, wodurch der prozentuale Temperaturanstieg während des Blitzes reduziert wird. Ein typischer Lichtbogenlampenstrom während des Blitzbetriebs ist in Fig. 2 dargestellt.

Das Vorzünden erfordert in diesem Fall eine sehr kostenintensive Elektronik.

Zudem sind die maximal mögliche Spannung und der maximal mögliche Strom der IGBTs eingeschränkt. Die Energie der Vorzündung ist somit durch die IGBTs limitiert.

Die Aufgabe der Erfindung besteht somit darin, die Belastung einer Blitzlampe bei der Erzeugung eines Hauptpulses durch eine Vorzündung zu minimieren und die Vorzündung zum einen durch eine einfache elektronische Schaltung zu realisieren und andererseits die Vorzündung für weitere Anwendungen nutzbar und vorteilhaft zu gestalten.

Verfahrensseitig wird die Aufgabe durch ein Verfahren der eingangs genannten Art gelöst, dass der Vorpuls dadurch erzeugt wird, dass eine zur Vorspannung höhere Plasmaspannung als Elektrodenspannung angelegt wird und durch Zündung mittels einer Zündelektrode ein Plasma in der Blitzlampe gezündet und mittels der Vorspannung während des Vorpulses gehalten wird. Damit hat das Plasma in der Blitzlampe zum Zeitpunkt des Hauptpulses bereits das maximal mögliche Plasmavolumen erreicht, wobei die Spannung und der Strom durch die Grenzwerte der IGBTS, nicht limitiert sind da keine IGBTS benötigt werden. Die Reproduzierbarkeit der Zündung des Plasmas wird durch die Erzeugung eines Zündpulses mittels der Zündelektrode erreicht. Das eröffnet die Möglichkeit einer genauen zeitlichen Steuerung und damit verbunden auch die Möglichkeit des zeitgleichen Zündens mehrerer parallel angeordneter Lampen.

In einer Ausgestaltung des Verfahrens ist vorgesehen,

- dass die Vorspannung aus einer Vorspannungsquelle mit einer ersten Kapazität als Elektrodenspannung angelegt wird,

- dass parallel zu der Vorspannung, jedoch zur Vorspannungsquelle rückwirkungsfrei, als zusätzliche Elektrodenspannung die Plasmaspannung aus einer Plasmaspannungsquelle mit einer zweiten Kapazität, die mindestens um eine Größenordnung geringer (C2<<C1) als die erste Kapazität (C1) ist, angelegt wird,
- dass der Vorpuls erzeugt wird, indem an die Zündelektrode eine einen mit der Plasmaspannung erzeugten Zündpuls bewirkende Zündspannung angelegt wird, wobei durch die Plasmaspannung ein Durchbruch bewirkt und durch die Vorspannung gehalten wird.

Üblicherweise wird ein Zünden des Plasmas in der Lampe nicht durch die Vorspannung sondern erst durch das Anlegen einer Plasmaspannung bewirkt. Grundsätzlich ist es möglich, diese Plasmaspannung so hoch zu wählen, dass bereits ein Zünden des Plasmas auch ohne eine externe Zündhilfe erfolgt. Allerdings ist es zweckmäßig, die Plasmaspannung so einzustellen, dass damit allein noch kein Zünden des Plasmas erfolgt, sondern dass die Zündelektrode eingesetzt wird, um erst durch ein Anlegen einer Zündspannung an die Zündelektrode ein Zünden des Plasmas bei angelegter Plasmaspannung zu ermöglichen. Damit wird es möglich genau den Zeitpunkt des Zündens zu bestimmen. Damit wird ein Zündpuls des Lampenstromes bewirkt.

Der Zündpuls erzeugt mit einer vergleichsweise kleinen Kapazität und einer hohen Spannung (vergleichen mit den Vorspannung und Hauptspannung) einen kurzen Boost-Strom.

Das Zünden über eine Zündelektrode hat außerdem einen Vorteil bei dem parallelen Betrieb mehrerer Lampen. Sollen nämlich mehrere Lampen (elektrisch unabhängig) synchron betrieben werden, ist der Zündpuls entscheidend um ein gleichzeitiges Zünden zu realisieren.

In einer Ausgestaltung des Verfahrens ist vorgesehen, dass eine parallel zur Vorspannungs- und Plasmaspannungsquelle jedoch von diesen trennbare Hauptspannungsquelle eine Hauptspannung als Elektrodenspannung zur Erzeugung des Hauptpulses angelegt und der Hauptpuls erzeugt wird, indem an die Zündelektrode eine einen mit der Hauptspannung erzeugten Hauptpuls erzeugende Zündspannung angelegt wird.

Damit wird ersichtlich, dass der Blitz nun aus drei unabhängigen sich überlagernden Teilpulsen besteht - Zündpuls, Vorpuls und Hauptpuls - welche jedoch alle auf je einer Kondensatorentladung beruhen. Damit kann ausschließlich kosteneffiziente und langlebige Elektronik genutzt werden.

Der Vorpuls und der Hauptpuls können unabhängig voneinander abgestimmt werden, d.h. bei Vor- und Hauptpuls können

- die Pulsdauer,

- die Kapazität (C),
- die Induktivität (L),
- die Energie

unabhängig von einander eingestellt werden (es besteht keine Limitierung durch IGBTs). Die Energie des Vorpulses kann dabei auch die Energie des Hauptpulses übersteigen, sofern dies technologisch erforderlich ist, was bei dem dargestellten Stand der Technik nicht möglich ist.

In einer weiteren Ausgestaltung des Verfahrens ist vorgesehen, dass die Hauptspannungsquelle während des Vorpulses von den Elektroden getrennt und nur während Hauptpulses mit den Elektroden verbunden wird.

Damit wird vermieden, dass in der Hauptspannungsquelle gespeicherte Energie bereits beim Vorpuls abgezogen wird.

Mit einer Anordnung der eingangs genannten Art wird die erfindungsgemäße Aufgabenstellung dadurch gelöst, dass der Vorspannungsquelle rückwirkungsfrei eine eine Plasmaspannung erzeugende Plasmaspannungsquelle parallel geschaltet ist, deren Wirkung durch die Zündelektrode steuerbar ist, wobei die Plasmaspannung größer als die Vorspannung ist.

Damit besteht die Möglichkeit, die Plasmaspannungsquelle mit der Plasmaspannung aufzuladen, die durch das Anlegen einer Zündspannung an die Zündelektrode ein Zünden des Plasmas bewirkt und dann zu Plasmaerhaltung die Vorspannungsquelle dient. Rückwirkungsfrei wird die Parallelschaltung dadurch, dass Mittel vorgesehen sind, die ein Entladen der Plasmaspannungsquelle in die Vorspannungsquelle verhindern.

In einer Ausgestaltung der Anordnung ist vorgesehen, dass

- die Vorspannungsquelle einen ersten Kondensator (1) aufweist, der mit einer den ersten Kondensator aufladenden ersten Ladeeinheit verbunden ist,
- dass der Vorspannungsquelle die Plasmaspannungsquelle über eine erste Entkopplung parallel geschaltet ist,
- dass die Plasmaspannungsquelle einen zweiten Kondensator (5) aufweist, der mit einer den zweiten Kondensator aufladenden zweiten Ladeeinheit verbunden ist und der eine Kapazität aufweist, die mindestens um eine Größenordnung geringer ist als die Kapazität des ersten Kondensators, und
- dass die Zündelektrode der Blitzlampe mit einem Zündspannungsgenerator verbunden ist, der durch das Steuersystem steuerbar mit diesem verbunden ist.

Die Funktion ist nun darin zu sehen, dass der erste Kondensator durch die erste Ladeeinheit auf die Vorspannung aufgeladen wird. In gleicher Weise wird der zweite Kondensator durch die zweite Ladeeinheit auf die Plasmaspannung aufgeladen. Die Plasmaspannung ist höher als die Vorspannung. Da die Plasmaspannungsquelle durch die Entkopplung der Vorspannungsquelle parallel geschaltet ist, wird die Plasmaspannungsquelle nicht an die Vorspannungsquelle entladen. D.h. der erste Kondensator kann nicht etwa auf die Plasmaspannung aufgeladen werden.

Andererseits liegt damit die Plasmaspannung an den Elektroden der Lampe an.

Wie bereits erwähnt, wird die Plasmaspannung so gewählt werden, dass sie selbst gerade noch nicht in der Lage ist, ein Plasma in der Lampe zu zünden. Erst wenn an die Zündelektrode eine Zündspannung angelegt wird, erfolgt ein Zünden des Plasmas und es kommt zu dem Zündpuls des Lampenstroms. Die vergleichsweise zu dem ersten Kondensator geringe Kapazität des zweiten Kondensators bewirkt, dass der zweite Kondensator während des Zündpulses entladen wird. Damit liegt nunmehr an den Elektroden als Elektrodenspannung die Vorspannung an. Die vergleichsweise große Kapazität des ersten Kondensator bewirkt, dass dieser mit einer großen Ladungsmenge versehen werden kann. Damit wird sichergestellt, dass der Lampenstrom aus dem ersten Kondensator während der gesamten Dauer des Vorpulses fließen kann. Die Vorteile und Nutzungsmöglichkeiten dieses relativ langen Vorpulses wird nachfolgend noch geschildert.

In einer weiteren Ausgestaltung der Anordnung ist vorgesehen, dass die Hauptspannungsquelle einen dritten Kondensator aufweist, der mit einer den dritten Kondensator aufladenden dritten Ladeeinheit verbunden ist und dass die Hauptspannungsquelle über einen Schalter, der von dem Steuersystem steuerbar ist, mit den Elektroden verbunden ist.

Die Funktion ist darin zu sehen, dass während des Zündpulses und des Vorpulses die Hauptspannung aus der Hauptspannungsquelle nicht an den Elektroden anliegt. Erst wenn der Hauptpuls gezündet werden soll, wird der Schalter eingeschaltet, wodurch die Hauptspannung als Elektrodenspannung anliegt. Gleichzeitig wird über das Anlegen einer Zündspannung an die Zündelektrode ein Zünden der Lampe bewirkt. Infolge der Hauptspannung und der in dem dritten Kondensator gespeicherte Ladungsmenge wird der Hauptpuls des Lampenstromes hervorgerufen, der den Blitz erzeugt.

Zweckmäßigerweise ist der Schalter als Thyristor ausgebildet.

Der Steuereingang des Schalters, insbesondere das Gate des Thyristors ist mit der Steuereinheit verbunden. Damit kann ein zeitlich genaues Erzeugen des Blitzes bewirkt werden.

Das zeitlich aufeinander abgestimmte Laden und Zünden kann insbesondere dadurch erfolgen, dass mindestens eine der Ladeeinheiten mit dem Steuersystem durch dieses steuerbar verbunden ist.

In einer weiteren Ausgestaltung der Erfindung wird die Rückwirkungsfreiheit der Plasmaspannungsquelle gegenüber der Vorspannungsquelle dadurch realisiert, dass sowohl die Vorspannungsquelle als auch die Plasmaspannungsquelle über je eine in Flussrichtung gepolte Diode mit einer Elektroden der Blitzlampe verbunden ist.

Dies bewirkt dass die Diode der Plasmaspannungsquelle in durchlässig ist, wenn die Plasmaspannung höher ist als die Vorspannung. Ist der zweite Kondensator entladen, ist die Spannung der Plasmaspannungsquelle nicht mehr höher als die Vorspannung. Damit wird die Diode der Plasmaspannungsquelle gesperrt und die Diode der Vorspannungsquelle öffnet. Als Elektrodenspannung wirkt jetzt die Vorspannung, ohne dass diese über den zweiten Kondensator entladen werden kann.

Die Erfindung soll nachfolgend anhand eines Ausführungsbeispieles näher erläutert werden. In den zugehörigen Zeichnungen zeigt

Fig. 1   eine Anordnung nach dem Stand der Technik,

Fig. 2   einen Verlauf des Lampenstromes mit einem Vorpuls nach dem Stand der Technik,

Fig. 3   eine Anordnung zur Blitzlampensteuerung gemäß der Erfindung,

Fig. 4   eine Darstellung der erfindungsgemäßen Blitzerzeugung mit drei Teilpulsen und

Fig. 5   eine Simulation von Vor- und Hauptpuls sowie des resultierenden Gesamtpulses.

Die Fig. 1 und 2 wurden bereits bei der Darstellung des Standes der Technik beschrieben.

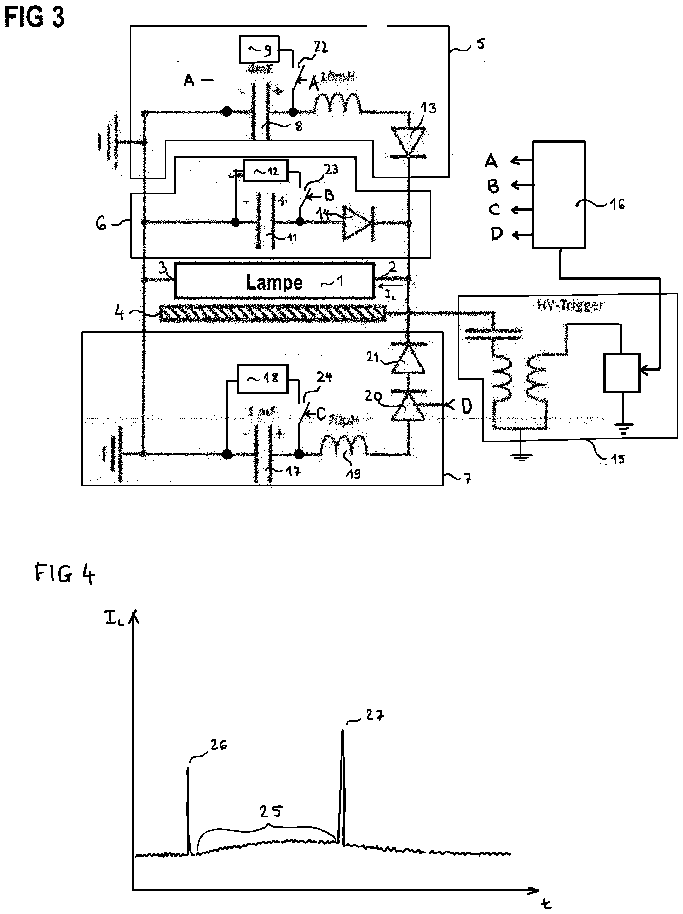

Fig. 3 stellt nun eine Anordnung mit den erfindungsgemäßen Merkmalen dar. Diese weist eine Blitzlampe 1 auf, die mit zwei Elektroden 2; 3 versehen ist. Weiterhin ist eine Zündelektrode 4 vorgesehen, die unmittelbar benachbart zur Blitzlampe 1 angeordnet ist und somit Wirkungsverbindung mit dieser steht, da ein elektrisches Feld an der Zündelektrode 4 auf das Zündverhalten der Blitzlampe 1 Einfluss nehmen kann. Eine solche Zündelektrode kann durch einen einfachen Draht auf der Außenseite des Lampenkörpers oder einen Reflektor o.ä. realisiert werden.

Zwischen den Elektroden 2 und 3 ist eine Elektrodenspannung anlegbar, die gemäß der Erfindung als Plasmaspannung, Vorspannung oder Hauptspannung gestaltet werden kann. Demensprechend ist eine eine Vorspannung erzeugende Vorspannungsquelle, eine eine Plasmaspannung erzeugende Plasmaspannungsquelle sowie eine eine Hauptspannung erzeugende Hauptspannungsquelle 7 vorgesehen.

Die Vorspannungsquelle 5 weist einen ersten Kondensator 8 auf, der mit einer den ersten Kondensator 8 aufladenden ersten Ladeeinheit 9 verbunden ist. Der erste Kondensator 8 bildet zusammen mit einer ersten Induktivität 10 einen Schwingkreis.

Die Plasmaspannungsquelle 6 weist einen zweiten Kondensator 11 auf, der mit einer den zweiten Kondensator 11 aufladenden zweiten Ladeeinheit 12 verbunden ist.

Die Kapazität $C_2$ des zweiten Kondensators 11 ist mindestens um eine Größenordnung geringer ist als die Kapazität $C_1$ des ersten Kondensators 8.

Die Plasmaspannungsquelle 6 ist zu der Vorspannungsquelle 5 über eine erste Entkopplung parallel geschaltet. Durch diese erste Entkopplung wird die Parallelschaltung rückwirkungsfrei. Diese erste Entkopplung weist eine erste Diode 13 auf, die in Reihe mit dem ersten Kondensator 8 und der ersten Induktivität 10 liegt und in Flussrichtung des zur Blitzlampe 1 fließenden Lampenstromes $I_L$ gepolt ist. In gleicher Weise weist die erste Entkopplung eine zweite Diode 14 auf, die in Reihe mit dem zweiten Kondensator 11 liegt und ebenfalls in Flussrichtung des zur Blitzlampe 1 fließenden Lampenstromes $I_L$ gepolt ist.

Die zweite Ladeeinheit 12 lädt den zweiten Kondensator auf die Plasmaspannung auf, die so hoch gewählt wird, dass ein reproduzierbares Zünden erfolgt, vorzugsweise höher liegt, als die Vorspannung, mit der der erste Kondensator 8 aufgeladen ist. Damit liegt an der Kathode der ersten Diode 13 eine höhere Spannung an, als an ihrer Anode und sie sperrt. Dagegen ist die zweite Diode 14 in Durchlass, da an ihrer Anode eine höhere Spannung anliegt als an ihrer Kathode.

Ist der zweite Kondensator entladen, ist seine Spannung kleiner als die Vorspannung und die zweite Diode 14 sperrt und die erste Diode 13 ist in Durchlass.

Die Wirkung der Plasmaspannungsquelle 6 ist durch die Zündelektrode 4 steuerbar. Hierzu ist die Zündelektrode mit einem Zündspannungsgenerator 15 verbunden, der durch ein Steuersystem 16 steuerbar mit diesem verbunden ist.

Die Hauptspannungsquelle 7 weist einen dritten Kondensator 17 auf, der mit einer den dritten Kondensator 17 auf Hauptspannung aufladenden dritten Ladeeinheit 18 verbunden ist. Der dritte Kondensator 17 bildet mit einer zweiten Induktivität 19 einen Schwingkreis.

Die Hauptspannungsquelle 7 ist über eine zweite Entkopplung mit den Elektroden 2 und 3 verbunden. Die zweite Entkopplung besteht aus einem Thyristor 20 und einer dritten Diode 21. Über den als Schalter wirkenden Thyristor 20 ist die die Hauptspannungsquelle 7 von dem Steuersystem 16 steuerbar.

Auch die Ladeeinheiten 9; 12 oder 18 können mit dem Steuersystem 16 durch dieses steuerbar verbunden sein. Wie durch die Schalter 22; 23 und 24 symbolisiert, können sie zu bestimmten Zeitpunkten von dem Steuersystem 16 abgeschaltet werden, beispielsweise die erste Ladeeinheit 9 und/oder die zweite Ladeeinheit 12 während der Erzeugung des Hauptpulses.

Eine Steuerung ist allerdings nicht zwingend erforderlich, wenn die Ladeeinheiten den Zeitpunkt des Blitzes selbständig erkennen oder sobald die Spannung den Sollwert erreicht hat.

Die Zuordnung der Steuereingänge der Schalter 20; 22; 23 und 24 zu dem Steuersystem 16 ist durch die Buchstaben A bis D symbolisiert.

Die Funktion der Anordnung ist nun darin zu sehen, dass die Vorspannung aus der Vorspannungsquelle 5 mit dem ersten Kondensator 8 und seiner ersten Kapazität C1 als Elektrodenspannung angelegt wird. Parallel zu der Vorspannung, jedoch - wie oben beschrieben, zur Vorspannungsquelle rückwirkungsfrei - wird die Plasmaspannung aus der Plasmaspannungsquelle 6, d. h. aus dem aufgeladenen zweiten Kondensators 11 mit seiner zweiten Kapazität $C_2$, die mindestens um eine Größenordnung geringer ($C_2 \ll C_1$) als die erste Kapazität $C_1$ ist, als zusätzliche Elektrodenspannung angelegt wird. Die Elektrodenspannung entspricht nun der Plasmaspannung, die deutlich höher als die Vorspannung ist.

Der in Fig. 4 dargestellte Vorpuls 25 wird nun dadurch erzeugt, dass eine zur Vorspannung höhere Plasmaspannung als Elektrodenspannung angelegt wird und durch Zündung mittels der Zündelektrode 4 ein Zündpuls des Lampenstroms $I_L$ erzeugt wird, wodurch ein Plasma in der Blitzlampe 1 gezündet und mittels der Vorspannung während des Vorpulses 25 gehalten wird. Am Ende des Zündpulses 26 ist der zweite Kondensator 12 mit seiner kleinen Kapazität entladen. Seine Funktion der Bereitstellung einer initial hohen Plasmaspannung ist erfüllt.

Durch die parallel zur Vorspannungsquelle 5 und Plasmaspannungsquelle 6, jedoch von diesen trennbare Hauptspannungsquelle 7 wird während des Vorpulses 25 eine Hauptspannung als Elektrodenspannung zur Erzeugung des Hauptpulses 27 angelegt. Der Hauptpuls 27 wird erzeugt, indem durch den Kondensator 17 durch Schalten des Thyristors 20 eine den Hauptpuls 27 erzeugende Hauptspannung angelegt wird.

Analog zu den bereits beschriebenen Konzepten des Standes der Technik wird ein Plasma vor dem eigentlichen Blitz gezündet. Zusätzlich zum Schwingkreis des eigentlichen Blitzes (Hauptpuls) wird ein weiterer Schwingkreis (unabhängig hinsichtlich sämtlicher Parameter) parallel geschalten, welcher zur Erzeugung eines Vorpulses 25 dient. Das Plasma hat zum Zeitpunkt des Hauptpulses 27 bereits das maximal mögliche Plasmavolumen erreicht.

Ein dritter Parallelkreis des Zündspannungsgenerators 15 unterstützt die Reproduzierbarkeit der Zündung des Vorpulses 25, welche durch die Zündelektrode 4 erfolgt. Der Zündpuls 26, erzeugt mit der vergleichsweise kleinen Kapazität $C_2$ und einer hohen Spannung (vergleichen mit den sonstigen Kreisen) einen kurzen Boost-Strom. Sollen mehrere Lampen (elektrisch unabhängig) synchron betrieben werden, ist der Zündpuls entscheidend um ein gleichzeitiges Zünden zu realisieren.

Wie in Fig. 2 dargestellt, besteht der Blitz nun aus drei unabhängigen sich überlagernden Teilpulsen, welche jedoch alle auf einer Kondensatorentladung beruhen. Damit kann ausschließlich kosteneffiziente und langlebige Elektronik genutzt werden.

In Abhängigkeit von der Lampenlänge bzw. von dem Lampendurchmesser treten wesentliche Änderungen des Plasmawiderstandes auf. Erst durch die freie Kombination der elektrischen Parameter (I und Induktivität (L) 10 und 19) von Vorpuls 25 und Hauptpuls 27 kann der Gesamtblitz optimal erfolgen.

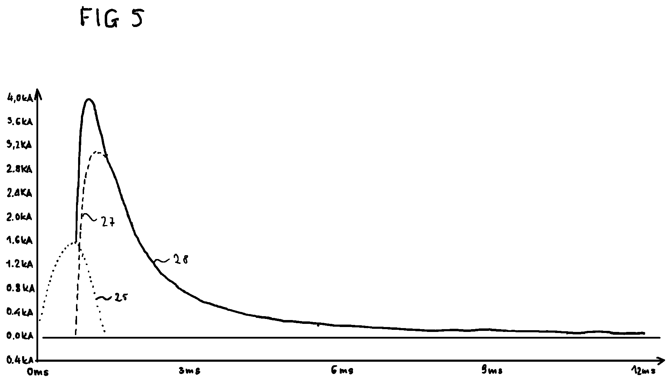

In Fig. 5 ist der Lampenstrom bei dem Vorpuls 25 in einer gepunkteten Linie, bei dem Hauptpuls 27 in einer gestrichelten Linie und die Addition 28 beider in einer ausgezogenen Linie dargestellt.

Bei der Darstellung gemäß Fig. 5 sind die Kapazitäten entsprechend so eingestellt, dass die Entladung vollständig bei idealen Stromverläufen (hinsichtlich Lampenbelastung) erfolgt. Besonders bei langen Lampen (großer Plasmawiderstand) ist die Dämpfung des Schwingkreises sehr hoch (lange Zeit, Kondensator entlädt nicht vollständig). Um die Dämpfung zu reduzieren, kann die Kapazität verkleinert oder/ und die Induktivität erhöht werden (Höhere Induktivität bedingt jedoch eine längere Pulsdauer). Eine kleinere Kapazität bedeutet wiederum eine geringere Energie bei gleicher Spannung. Um dem entgegen zu wirken, muss die Spannung erhöht werden, was technisch die Bauteilvielfalt und Sicherheit der Anlagen einschränkt und wirtschaftlich höhere Kosten verursacht. Ziel ist es somit, bei moderaten Spannungen ausreichend Energie zuführen zu können.

Wie aus Fig. 5 weiterhin ersichtlich, ist die Energie des Vorpulses 25 auf die Energie des Hauptpulses 27 abgestimmt. Bei zu geringer Energie des Vorpulses 25 würde beispielsweise die Lampe zerstört werden (Druckanstieg und Stromanstieg zu hoch). Die Blitzlampe 1 hat zum Zeitpunkt der Erzeugung des Hauptpulses 27 bereits nahezu den minimalen Widerstand erreicht, was die Dämpfung des Hauptpulses 27 reduziert bzw. die Pulszeit verkürzt (gegenüber ohne Vorpuls 25). Die Abstimmung der elektronischen Parameter ist zwingend notwendig für den Betrieb in der dargestellten Variante. Falsch abgestimmte Netzwerke würden beispielsweise zum Erlöschen des Plasmas führen, obwohl die Kondensatoren noch nicht wesentlich entladen sind.

Darüber hinaus existieren durch die Erfindung bisher nicht realisierte technologische Möglichkeiten, welche im Folgenden beschrieben werden.

Durch eine geschickte Kombination von Vor- und Hauptpuls kann ein durch die Blitzlampe oder eine Blitzlampen-Mehrfachanordnung ein bestrahltes Substrat zweistufig erwärmt werden, jedoch innerhalb nur eines Pulses.

Damit kann die Vorheizung, wie sie beispielsweise durch IR-Strahler bekannt ist, vollständig oder teilweise entfallen. Die Vorheizung dient im Wesentlichen zum Erreichen eines notwendigen Temperaturhubs, wobei die Zerstörung des Substrats verhindert wird.

Eine Reduktion der Konventionellen Vorheizung durch die Erfindung mindert das thermische Gesamtbudget und unterdrückt beispielsweise Diffusionsprozesse im Substrat oder Substratschichten.

Darüber hinaus können in Verbindung mit einer konventionellen Vorheizung durch den zweistufigen Puls höhere Maximaltemperaturen realisiert werden. Dadurch lassen sich neuartige Materialien herstellen, welche mit den bisherigen Verfahren nicht realisierbar sind.

Eine weitere Ausgestaltungsmöglichkeit bei Nutzung der Erfindung ist die Kombination von zwei Blitzlampenfeldern, eins von der Substratrückseite und eins von der Substratoberseite. Der Vorpuls wird für beide Lampenfelder synchron angewandt. Darüber hinaus erfolgt von der Oberseite zusätzlich die Zündung des Hauptpulses.

Mit dieser Art der Anwendung wird das Substrat effektiv von beiden Seiten vorgeheizt (Reduktion des thermischen Stresses) wobei die Oberseite zusätzlich mit einem kurzen Hauptpuls auf die geforderte Zieltemperatur gebracht wird.

**Bezugszeichenliste**

| | |
|---|---|
| 1 | Blitzlampe |
| 2 | Elektrode |
| 3 | Elektrode |
| 4 | Zündelektrode |
| 5 | Vorspannungsquelle |
| 6 | Plasmaspannungsquelle |
| 7 | Hauptspannungsquelle |
| 8 | erster Kondensator |
| 9 | erste Ladeeinheit |
| 10 | erste Induktivität |
| 11 | zweiter Kondensator |
| 12 | zweite Ladeeinheit |
| 13 | erste Diode |
| 14 | zweite Diode |
| 15 | Zündspannungsgenerator |
| 16 | Steuersystem |
| 17 | dritter Kondensator |
| 18 | dritte Ladeeinheit |
| 19 | zweite Induktivität |
| 20 | Thyristor |
| 21 | dritte Diode |
| 22 | Schalter |
| 23 | Schalter |
| 24 | Schalter |
| 25 | Vorpuls |
| 26 | Zündpuls |
| 27 | Hauptpuls |
| 28 | Addition |

**Patentansprüche**

1. Verfahren zur Blitzlampensteuerung bei dem durch Anlegen einer Elektrodenspannung an die Elektroden (2;3) einer Blitzlampe (1) ein einen Blitz erzeugender Hauptpuls (27) des Lampenstromes $I_L$ bewirkt wird und vor der Blitzerzeugung ein Vorpuls (25) des Lampenstromes $I_L$ durch Anlegen einer Vorspannung erzeugt wird,
**dadurch gekennzeichnet, dass** der Vorpuls (25) dadurch erzeugt wird, dass eine zur Vorspannung höhere Plasmaspannung als Elektrodenspannung angelegt wird und durch Zündung mittels einer Zündelektrode (4) ein Plasma in der Blitzlampe (1) gezündet und mittels der Vorspannung während des Vorpulses (25) gehalten wird.

2. Verfahren nach Anspruch 1, **dadurch gekennzeichnet,**

   - **dass** die Vorspannung aus einer Vorspannungsquelle (5) mit einer ersten Kapazität ($C_1$) als Elektrodenspannung angelegt wird,
   - **dass** parallel zu der Vorspannung, jedoch zur Vorspannungsquelle (5) rückwirkungsfrei, als zusätzliche Elektrodenspannung die Plasmaspannung aus einer Plasmaspannungsquelle (6) mit einer zweiten Kapazität ($C_2$), die mindestens um eine Größenordnung geringer ($C_2 \ll C_1$) als die erste Kapazität ($C_1$) ist, angelegt wird,
   - **dass** der Vorpuls (25) erzeugt wird, indem an die Zündelektrode (4) eine einen mit der Plasmaspannung erzeugten Zündpuls (26) bewirkende Zündspannung angelegt wird, wobei durch die Plasmaspannung ein Durchbruch bewirkt und durch die Vorspannung gehalten wird.

3. Verfahren nach Anspruch 1, **dadurch gekennzeichnet, dass** eine parallel zur Vorspannungsquelle (5) und Plasmaspannungsquelle (6) jedoch von diesen trennbare Hauptspannungsquelle (7) eine Hauptspannung als Elektrodenspannung zur Erzeugung des Hauptpulses (27) anlegt.

4. Verfahren nach Anspruch 2, **dadurch gekennzeichnet, dass** die Hauptspannungsquelle (7) während des Vorpulses (25) von den Elektroden (2; 3) getrennt und nur während Hauptpulses (27) mit den Elektroden (2;3) verbunden wird.

5. Anordnung zur Blitzlampensteuerung mit einer Blitzlampe (1), die mit zwei Elektroden (2; 3) versehen ist, zwischen denen eine Elektrodenspannung anlegbar ist, einer mit der Blitzlampe (1) in Wirkungsverbindung stehenden Zündelektrode (4), einer eine Vorspannung erzeugende Vorspannungsquelle (5), einer Hauptspannungsquelle (7) und einem Steuersystem (16), **dadurch gekennzeichnet, dass** der Vorspannungsquelle (5) rückwirkungsfrei eine eine Plasmaspannung erzeugende Plasmaspannungsquelle (6) parallel geschaltet ist, deren Wirkung durch die Zündelektrode (4) steuerbar ist, wobei die Plasmaspannung größer als die Vorspannung ist.

6. Anordnung nach Anspruch 5, **dadurch gekennzeichnet, dass**

   - die Vorspannungsquelle (5) einen ersten Kondensator (8) aufweist, der mit einer den ersten Kondensator (8) aufladenden ersten Ladeeinheit (9) verbunden ist,
   - dass der Vorspannungsquelle (5) die Plasmaspannungsquelle (6) über eine erste Entkopplung parallel geschaltet ist,
   - dass die Plasmaspannungsquelle (6) einen zweiten Kondensator (11) aufweist, der mit einer den zweiten Kondensator (11) aufladenden zweiten Ladeeinheit (12) verbunden ist und der eine Kapazität ($C_2$) aufweist, die mindestens um eine Größenordnung geringer ist als die Kapazität ($C_1$) des ersten Kondensators (8),
   - dass die Zündelektrode (4) der Blitzlampe (1) mit einem Zündspannungsgenerator (15) verbunden ist, der durch das Steuersystem (16) steuerbar mit diesem verbunden ist.

7. Anordnung nach Anspruch 5 oder 6, **dadurch gekennzeichnet, dass** die Hauptspannungsquelle (7) einen dritten Kondensator (17) aufweist, der mit einer den dritten Kondensator (17) aufladenden dritten Ladeeinheit (18) verbunden ist und dass die Hauptspannungsquelle (7) über einen Schalter (20), der von dem Steuersystem (16) steuerbar ist, mit den Elektroden (2; 3) verbunden ist.

8. Anordnung nach Anspruch 7, **dadurch gekennzeichnet, dass** der Schalter als Thyristor (20) ausgebildet ist.

9. Anordnung nach einem der Ansprüche 6 bis 8, **dadurch gekennzeichnet, dass** mindestens eine der Ladeeinheiten (9; 12; 18) mit dem Steuersystem (16) durch dieses steuerbar verbunden ist.

10. Anordnung nach einem der Ansprüche 6 bis 9, **dadurch gekennzeichnet, dass** die Rückwirkungsfreiheit der Plasmaspannungsquelle (6) gegenüber der Vorspannungsquelle (5) dadurch realisiert wird, dass sowohl die Vorspannungsquelle (5) als auch die Plasmaspannungsquelle (6) über je eine in Flussrichtung gepolte Diode (13; 14) mit einer Elektroden (2; 3) der Blitzlampe (1) verbunden ist.

# FIG 1
(Stand der Technik)

# FIG 2
(Stand der Technik)

**FIG 3**

**FIG 4**

FIG 5

Europäisches
Patentamt
European
Patent Office
Office européen
des brevets

**EUROPÄISCHER RECHERCHENBERICHT**

Nummer der Anmeldung

EP 18 19 4343

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 687 971 A (SHIMIZU NORIMITSU [JP]) 18. August 1987 (1987-08-18) | 1,5,8-10 | INV. H05B41/30 |
| Y | * Spalte 17, Zeilen 9-60; Abbildungen 26, 28 * | 2-4,6,7 | |
| X | WO 2009/095584 A1 (UNIV PARIS SUD [FR]; MARIGNIER JEAN-LOUIS [FR]; HERREN RAYMOND [FR]; B) 6. August 2009 (2009-08-06) | 1,5 | |
| Y | * Abbildungen 2-5 * | 2-4,6-10 | |
| Y | THRUM T ET AL: "Development of a powerful vortex stabilized water-wall flash lamp for RTP applications", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, Bd. 2, 3. Oktober 2004 (2004-10-03), Seiten 1019-1023, XP010735132, DOI: 10.1109/IAS.2004.1348538 ISBN: 978-0-7803-8486-6 * Abbildungen 3,4 * | 8-10 | |
| A | EP 2 605 623 A1 (UAB EKSPLA [LT]; VYTAUTO GRIGORAICIO IMONE MINTIES KVANTAS [LT]) 19. Juni 2013 (2013-06-19) * Abbildung 2 * | 1-10 | RECHERCHIERTE SACHGEBIETE (IPC)<br><br>H05B |

Der vorliegende Recherchenbericht wurde für alle Patentansprüche erstellt

| Recherchenort | Abschlußdatum der Recherche | Prüfer |
|---|---|---|
| München | 19. Februar 2019 | Müller, Uta |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 4343

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2019

| Im Recherchenbericht angeführtes Patentdokument | Datum der Veröffentlichung | Mitglied(er) der Patentfamilie | Datum der Veröffentlichung |
|---|---|---|---|
| US 4687971 A | 18-08-1987 | DE 3539712 A1<br>GB 2168554 A<br>US 4687971 A | 22-05-1986<br>18-06-1986<br>18-08-1987 |
| WO 2009095584 A1 | 06-08-2009 | EP 2243339 A1<br>FR 2926948 A1<br>WO 2009095584 A1 | 27-10-2010<br>31-07-2009<br>06-08-2009 |
| EP 2605623 A1 | 19-06-2013 | EP 2605623 A1<br>LT 5957 B | 19-06-2013<br>26-08-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MIT JIA, SHENLI et al.** The Plasma Channel of Pulsed Flashlams Working in an Array. *Plasma Science and Technology,* vol. 15 (7

- **T. THRUM et al.** Development of a Powerful Vortex Stabilized Water-Wall Flash Lamp for RTP Applications. *0-7803-8486-5/04 IEEE,* 2004